# EUROPÄISCHE PATENTSCHRIFT

(11) **EP 2 253 874 B1**
(45) Veröffentlichungstag und Bekanntmachung des Hinweises auf die Patenterteilung: **13.07.2016**
(21) Anmeldenummer: 10004618.4
(22) Anmeldetag: 03.05.2010
(51) Int. Cl.: F02B 37/00, F16L 23/12, F01N 13/08, F01N 13/18, F16L 23/028

(54) **Flanschverbindung**
Flange connection
Bride de liaison

(30) Priorität: 20.05.2009 DE 102009022217
(43) Veröffentlichungstag der Anmeldung: 24.11.2010
(73) Patentinhaber: Audi AG, 85045 Ingolstadt (DE); Friedrich Boysen GmbH & Co. KG, 72213 Altensteig (DE)
(72) Erfinder: Bahl, Hans-Ulrich, 85139 Wettstetten (DE)
(74) Vertreter: Krah, Annette

(56) Entgegenhaltungen:
- WO-A1-2008/154167
- DE-A1- 2 146 593
- FR-A- 1 293 138
- US-A- 95 621
- US-A- 4 209 177

## Beschreibung

Die Erfindung betrifft eine Flanschverbindung zwischen abgasführenden mit hohen Temperaturen beaufschlagten Bauteilen, insbesondere einem Gehäuse einer Abgasturbine eines Abgasturboladers und zum Beispiel einer Abgasleitung, gemäß dem Oberbegriff des Patentanspruches 1.

Insbesondere bei den mit sehr hohen Betriebstemperaturen beaufschlagten Gehäusen von Abgasturboladern für Brennkraftmaschinen sind die Flanschverbindungen mit angrenzenden, abgasführenden Bauteilen problematisch, weil die die Verbindung herstellenden Schraubbolzen bei diesen hohen Temperaturen und bei den auftretenden Temperaturschwankungen (zum Beispiel zwischen kalter und betriebswarmer Brennkraftmaschine) hohen Belastungen und Wärmespannungen ausgesetzt sind. So wurden Temperaturen der Schraub- bzw. Stehbolzen am Flansch des Turbinengehäuses in einem Bereich von 800°C - 850°C gemessen. Um demgegenüber eine sichere Schraubverbindung zu gewährleisten, müssen die Bolzentemperaturen um 100K auf 700°C - 750°C gesenkt werden.

Eine Flanschverbindung, die einen derartigen problematischen Aufbau zeigt, beschreibt die US 95621 A, bei der miteinander zu verbindende Rohrabschnitte außenumfangsseitige, voneinander beabstandete Ringbünde aufweisen, die in einer formschlüssigen Passverbindung von darauf aufgesteckten Anschlussflanschen umgriffen werden, welche Anschlussflansche anschließend mittels einer Schraubverbindung fest miteinander verspannt werden.

FR1293138A offenbart den Oberbegriff des Anspruchs 1.

Aufgabe der Erfindung ist es, eine Flanschverbindung der gattungsgemäßen Art vorzuschlagen, die bei einer baulich einfachen Konstruktion und einer günstigen Montage eine verminderte Temperaturbelastung der Schraubbolzen ermöglicht.

Die Lösung dieser Aufgabe gelingt mit den Merkmalen des Patentanspruches 1. Vorteilhafte und besonders zweckmäßige Weiterbildungen der Erfindung sind den Unteransprüchen entnehmbar.

Erfindungsgemäß wird vorgeschlagen, dass der Anschlussflansch des ersten Bauteils, etwa dem Gehäuse, aufgeteilt ist in einen am Bauteil angeformten und eine Dichtfläche bildenden Ringbund und einen separaten Flanschteil, das mit den Befestigungselementen zusammenwirkt und den Ringbund mittelbar oder unmittelbar hintergreift, wobei das separate Flanschteil den Ringbund nur an Umfangsabschnitten kontaktiert. Durch die vorgeschlagenen Maßnahmen wird der Wärmeübergang vom Temperatur beaufschlagten Gehäuse zum separaten Flanschteil bzw. zu den Befestigungselementen, insbesondere Schraubbolzen, deutlich vermindert und somit eine höhere Belastbarkeit der Flanschverbindung hergestellt. Der konstruktive Aufwand ist dabei nicht erhöht, weil sich der Fertigungsaufwand des Gehäuses vermindert und weil gegebenenfalls durch den separaten Flansch Montagevorteile erzielbar sind.

Zur weiteren Verminderung eines Wärmeüberganges kann in fertigungstechnisch einfacher Weise zwischen dem Ringbund des ersten Bauteils und dem separaten Flanschteil ein zwischen den Umfangsabschnitten ausgebildeter Luftspalt vorgesehen sein.

Besonders bevorzugt kann der Ringbund mit radial abragenden Umfangsabschnitten versehen sein, die das separate Flanschteil mittelbar oder unmittelbar hintergreift. Es versteht sich, dass diese zum Beispiel lappenförmigen Umfangsabschnitte ausreichend tragfähig ausgelegt sein müssen. In kinematischer Umkehrung können entsprechende Umfangsabschnitte radial nach innen ragend auch am separaten Flanschteil angeformt sein.

Besonders zweckmäßig können entsprechend der Anzahl der Befestigungselemente, insbesondere Schraubbolzen, Umfangsabschnitte vorgesehen sein, die zudem im Bereich der Schraubbolzen positioniert sind. Dementsprechend erfolgt die Krafteinleitung von den Schraubbolzen zum ersten Bauteil, das heißt dem Gehäuse, direkt bzw. ohne unzulässige Werkstoffspannungen im Gehäuse zu erzeugen.

Des Weiteren können die Kontaktflächen zwischen den Umfangsabschnitten und dem separaten Flanschteil im Querschnitt betrachtet schräg zur Mittelachse der Schraubbolzen verlaufen. Neben einer günstigen Krafteinleitung mit nicht zu hohen Flächenpressungen stellt sich eine montagegünstige und eine zuverlässige Flanschverbindung sicherstellende Zentrierwirkung zwischen dem Gehäuse und dem separaten Flanschteil ein.

Die Schraubbolzen können vorteilhaft unmittelbar in den ringförmigen Flanschteil eingesetzt bzw. eingeschraubt sein.

Ferner kann zur Vereinfachung der Montage das separate Flanschteil mehrteilig ausgebildet sein. Besonders zweckmäßig kann das separate Flanschteil zweiteilig ausgeführt sein und jeweils zumindest zwei Schraubbolzen aufnehmen.

Alternativ kann das separate Flanschteil jedoch aus einem Flachmaterial hergestellt sein. Als Flachmaterial kann zum Beispiel Guß- oder Schmiedeeisen verwendet werden. Im Unterschied zu den obigen Ausführungsformen müssen die mit dem Ringbund des ersten Bauteils zusammenwirkenden Kontaktflächen nicht unmittelbar im separaten Flanschteil ausgebildet sein. Vielmehr können diese mit dem Ringbund zusammenwirkenden Kontaktflächen auch unmittelbar in Kopfstücken der Befestigungselemente, etwa Bolzenköpfe von Schraubbolzen, ausgebildet sein.

In einer weiteren alternativen Ausgestaltung der Erfindung kann der separate Flansch mit radial nach innen ragenden Umfangsabschnitten versehen sein, die mit den radial nach außen ragenden Umfangsabschnitten des Ringbundes in der Befestigungsposition zusammenwirken. Dies ermöglicht größere konstruktive Freiheitsgrade, insbesondere bei sehr beengten Einbauverhältnissen oder Montagebedingungen.

Insbesondere kann dabei der Luftspalt s zwischen den Umfangsabschnitten des Ringbundes und des Flansches so breit ausgeführt sein, dass der Flansch bei sich nicht überdeckenden Umfangsabschnitten auf den Ringbund aufschiebbar und durch Verdrehen bajonettartig mit den Umfangsabschnitten in Überdeckung bringbar ist.

In fertigungstechnisch günstiger Weise kann das anzuschließende, abgasführende zweite Bauteil ebenfalls mit einem eine Dichtfläche bildenden Ringbund und einem separaten Flanschteil ausgeführt sein, wobei sich die Schraubbolzen durch die beiden Flanschteile erstrecken. Zudem können die die beiden Ringbunde zusammenspannenden Flanschteile als Gleichteile hergestellt sein.

Mehrere Ausführungsbeispiele der Erfindung sind im Folgenden mit weiteren Einzelheiten näher erläutert. Die schematische Zeichnung zeigt in:
- Fig. 1: eine Draufsicht auf die Flanschverbindung an einem Gehäuse eines Abgasturboladers für Brennkraftmaschinen, mit einem eine Dichtfläche bildenden Ringbund und einem separaten Flansch mit eingesetzten Schraubbolzen;
- Fig. 2: einen Schnitt gemäß Linie II - II der Fig. 1 im Verbindungsbereich zwischen gehäuseseitigem Ringbund und dem separaten Flansch;
- Fig. 3: eine weitere Draufsicht auf eine zur Fig. 1 alternative Flanschverbindung mit einem mehrteiligen, aus Flachmaterial ausgeführten Flansch und mit den Flansch durchdringenden Schraubbolzen mit Kopfstücken, die mit Umfangsabschnitten des gehäuseseitigen Ringbundes zusammenwirken;
- Fig. 4: einen Schnitt gemäß Linie IV - IV der Fig. 3 wiederum im Verbindungsbereich zwischen gehäuseseitigem Ringbund und dem separaten Flansch;
Die Flanschverbindung der Abbildunegen 5 und 6 entspricht der Erfindung nicht.
Fig. 5 eine Ansicht Z gemäß Fig. 6 auf eine weitere, alternative Flanscherverbindung, bei der das Gehäuse des Abgasturboladers und das angrenzende Bauteil mit einem Ringbund im Verbindungsbereich und mit separaten Flanschen ausgeführt ist; und
- Fig. 6: einen Querschnitt gemäß Linie VI - VI der Fig. 5 durch die Flanschverbindung.

Im Folgenden Ausführungsbeispiel ist das erste Bauteil beispielhaft ein Gehäuse einer Abgasturbine eines Abgasturboladers für eine Brennkraftmaschine. Das zweite, damit strömungstechnisch verbundene Bauteil kann dagegen beispielhaft eine Abgasleitung, ein Konverter, etc. sein.

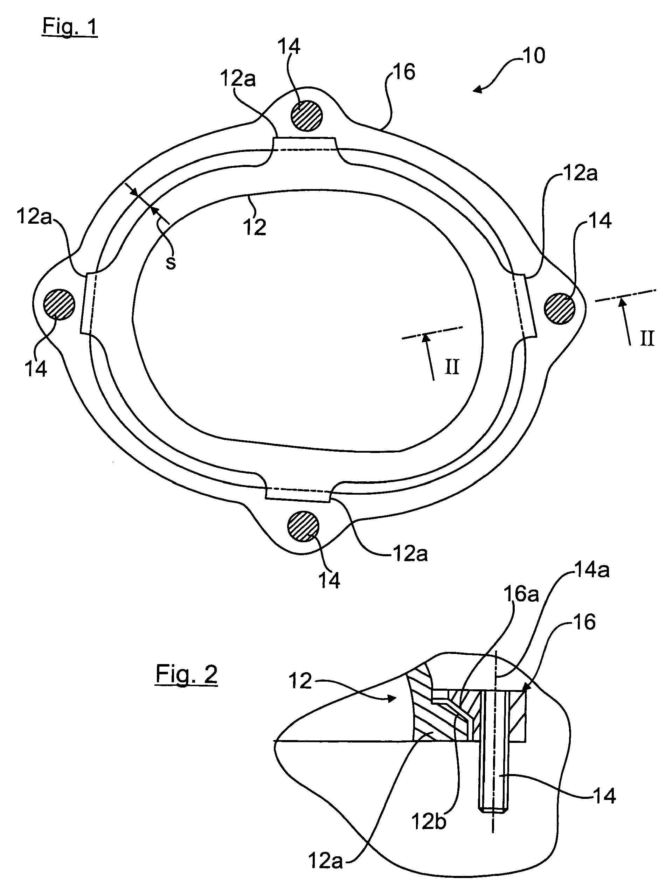

So zeigt die Fig. 1 eine Draufsicht auf einen Anschlussflansch 10 des Gehäuses der Abgasturbine des Abgasturboladers für die Brennkraftmaschine, bei der ein an das Gehäuse (nicht dargestellt) angeformter Ringbund 12 eine plane Dichtfläche bildet, die im Zusammenwirken mit einem korrespondierenden Flansch des angeschlossenen, abgasführenden zweiten Bauteiles eine Flanschverbindung bildet. Dabei sind über den Umfang des Ringbundes 12 als Befestigungselemente vier Schraubbolzen 14 vorgesehen, mittels denen unter Zwischenschaltung einer Dichtung eine feste Flanschverbindung herstellbar ist.

Die Schraubbolzen 14 sind aber nicht in den gehäusefesten Ringbund 12, sondern in ein separates, ringförmiges Flanschteil 16 eingesetzt (vgl. auch Fig. 2).

Ferner sind an dem Ringbund 12 je Schraubbolzen 14 radial abragende, lappenförmige Umfangsabschnitte 12a angeformt, die von radial nach innen abragenden Innenumfangsbereichen 16a des separaten Flanschteiles 16 hintergriffen werden.

Die Kontaktflächen 12b zwischen den Umfangsabschnitten 12a und den Innenumfangsbereichen des separaten Flansches 16 sind dabei schräg bzw. konisch zur Mittelachse 14a ausgerichtet, so dass eine Zentrierung des separaten Flanschteiles 16 zum Ringbund 12 stattfinden kann.

Wie insbesondere die Fig. 1 zeigt, ist das separate Flanschteil 16 so ausgeführt, dass nur im Verbindungsbereich (gepunktet eingezeichnet) eines jeden Schraubenbolzens 14 ein direkter, wärmeübertragender Kontakt zum gehäuseseitigen Ringbund 12 vorliegt. Im übrigen Umfangsbereich ist zwischen dem Innenumfang des separaten Flanschteiles 16 und dem Außenumfang des Ringbundes 12 ein isolierender Luftspalt s gebildet, der einen Wärmeübergang vom Ringbund 12 zum Flanschteil 16 vermindert. Die Positionierung der Schraubbolzen 14 kann sich nach deren Zugänglichkeit richten.

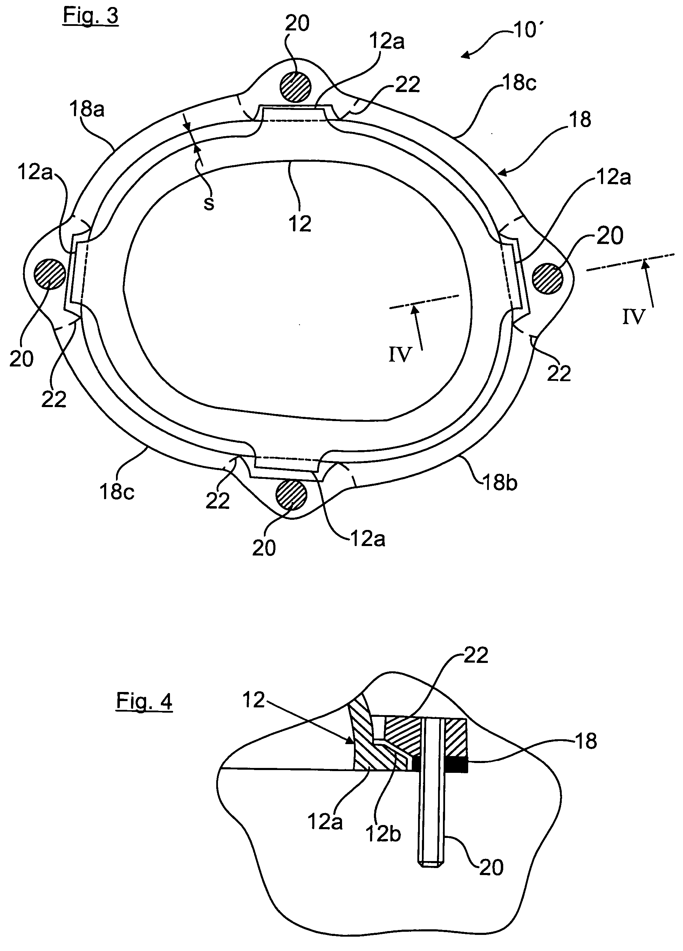

Die Fig. 3 und 4 zeigen einen alternativen Anschlussflansch 10', der nur soweit beschrieben ist, als er sich wesentlich von der Ausführung gemäß den Fig. 1 und 2 unterscheidet. Funktionell gleiche Teile sind mit gleichen Bezugszeichen versehen.

Abweichend zu den Fig. 1 und 2 ist der separate Flansch 18 als ein ringförmiges Bauteil aus einem Flachmaterial (vgl. Fig. 4) ausgeführt, das sich unter Aufrechterhaltung des Luftspaltes s um den Ringbund 12 mit den radial abragenden Umfangsabschnitte 12a erstreckt.

Durch den separaten Flansch 18 erstrecken sich die Schraubenbolzen 20, die mit Kopfstücken 22 (Fig. 4) die Umfangsabschnitte 12a wie vorbeschrieben mit schrägen Kontaktflächen 12b hintergreifen.

Die Kopfstücke 22 können unmittelbar an die Schraubenbolzen 20 angeformt sein; alternativ können die Schraubenbolzen 20 auch in separat gefertigte Kopfstücke 22 eingeschraubt oder anderweitig mit diesen fest verbunden sein.

Ferner kann das separate Flanschteil 18 auch mehrteilig, insbesondere zweiteilig ausgeführt sein. So können zwei etwa halbkreisförmige Flanschabschnitte 18a, 18b (Fig. 3) verwendet sein, von denen ein jeder zwei Schraubenbolzen 20 mit Kopfstücken 22 aufnimmt. Die dazwischen liegenden Flanschabschnitte 18c können dann gänzlich entfallen.

Zur Herstellung der beschriebenen Flanschverbindung wird unter Zwischenschaltung einer Flachdichtung der korrespondierende, Durchgangslöcher für die Schraubbolzen 14 oder 20 aufweisende Anschlussflansch eines abgasführenden Bauteiles auf den Ringbund 12 plan aufgesetzt, wobei die Schraubbolzen 14 oder 20 den Anschlussflansch durchdringen. Sodann werden Schraubenmuttern auf die Schraubbolzen 14 oder 20 aufgeschraubt und mit definiertem Anzugsmoment festgeschraubt.

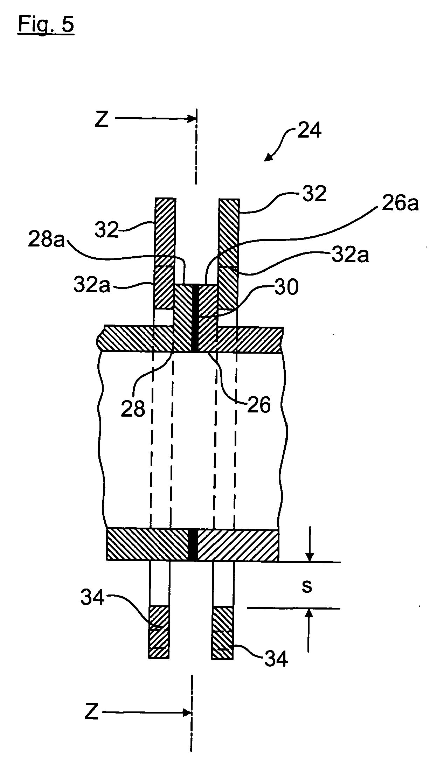

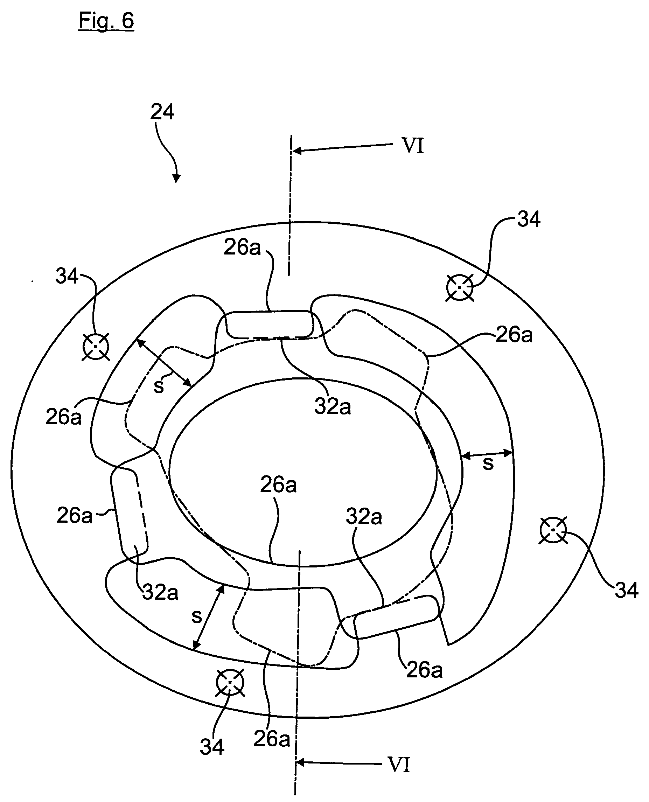

Die Fig. 5 und 6 zeigen eine Flanschverbindung 24, ausserhalb der Erfindung, bei der ein Ringbund 26 des Gehäuses des Abgasturboladers mit einem korrespondierenden Ringbund 28 eines abgrenzenden, Abgas führenden Bauteil unter Zwischenschaltung einer Ringdichtung 30 gasdicht verbunden ist.

Die Flanschverbindung 24 weist dazu zwei als Gleichteile ausgeführte, etwa ringförmige, separate Flanschteile 32 auf, die mit radial nach innen ragenden Umfangsabschnitten 32a versehen sind. Die Flanschabschnitte zwischen den Umfangsabschnitten 32a weisen wiederum einen Luftspalt s zu den Ringbunden 26 bzw. 28 auf.

An den Ringbunden 26, 28 sind ferner radial nach außen ragende Umfangsabschnitte 26a, 28a angeformt, die sich, wie ersichtlich ist, in der Verbindungsposition (in ausgezogenen Linien in Fig. 5 dargestellt) mit den Umfangsabschnitten 32a der Flansche 32 überdecken.

Die Luftspalte s sind so breit ausgeführt, dass die Flansche 32 mit ihren Umfangsabschnitten 32a in eine Montageposition verdrehbar sind, in der sie über die Ringbunde 26, 28 (in Fig. 6 gestrichelt eingezeichnet) schiebbar sind.

Der besseren Darstellung wegen ist der Ringbund 26 relativ zum Flansch 32 verdreht gezeichnet.

Die radiale Erstreckung der Umfangsabschnitte 32a bzw. der korrespondierenden Umfangsabschnitte 26a, 28a ist dabei so, dass die radial nach innen ragenden Umfangsabschnitte 32a der Flansche 32 über die Ringbunde 26, 28 schiebbar sind, während die radial nach außen ragenden Umfangsabschnitte 26a, 28a der Ringbunde 26, 28 innerhalb der Luftspalte s positioniert sind.

Nach Überdeckung der besagten Umfangsabschnitte 32a der Flansche 32 mit den Umfangsabschnitten 26a, 28a der Ringbunde 26, 28 werden die Flansche 32 mittels nicht dargestellter Schrauben zusammengespannt, wobei sich die Schrauben durch die dargestellten Bohrungen 34 der Flansche 32 erstrecken.

Die Positionierung der in die Bohrungen 34 eingesetzten Schrauben kann sich nach deren Zugänglichkeit bei der Montage richten. Die Schrauben können aber auch wie vorbeschrieben im Bereich der radial abragenden Umfangsabschnitte 32a bzw. 26a, 28a angeordnet sein.

## Patentansprüche

1. Flanschverbindung, geeignet zur Verbindung von abgasführenden, mit hohen Temperaturen beaufschlagten Bauteilen, wobei die Flanschverbindung einen, einem ersten der Bauteile zugeordneten Anschlussflansch (10; 10') aufweist, der über zumindest ein Befestigungselement der Flanschverbindung mit einem, einem zweiten der Bauteile zugeordneten Flansch der Flanschverbindung verbindbar ist, wobei der Anschlussflansch (10; 10') des ersten Bauteils zumindest zweiteilig mit zumindest einem am ersten Bauteil angeformten Ringbund (12) und einem separaten Flanschteil (16; 18;) ausgebildet ist, das mit dem Befestigungselement (14; 20) zusammenwirkt und den am ersten Bauteil angeformten Ringbund (12) hintergreift, wobei der Ringbund (12) des ersten Bauteils zumindest einen Umfangsabschnitt (12a) aufweist, an dem das separate Flanschteil (16; 18) den Ringbund (12) kontaktiert, wobei entsprechend der Anzahl der Befestigungselemente (14; 20) Umfangsabschnitte (12a) vorgesehen sind, **dadurch gekennzeichnet, dass** die Umfangsabschnitte (12a) im Bereich der Befestigungselemente (14; 20) positioniert sind.

2. Flanschverbindung nach Anspruch 1, **dadurch gekennzeichnet, dass** außerhalb des zumindest einen Umfangsabschnittes (12a; 26a, 28a) zwischen dem Ringbund (12; 26, 28) und dem separaten Flanschteil (16; 18; 32) ein isolierender Luftspalt (s) vorgesehen ist.

3. Flanschverbindung nach Anspruch 2, **dadurch gekennzeichnet, dass** der Luftspalt (s) zwischen dem Ringbund (12; 26, 28) und dem separaten Flanschteil (16; 18; 32) so breit ausgeführt ist, dass das Flanschteil (16; 18; 32) bei sich nicht überdeckendem Umfangsabschnitt (12a; 26a, 28a) auf den Ringbund (12; 26, 28) aufschiebbar ist und durch Verdrehen mit dem Umfangsabschnitt (12a; 26a, 28a) in Überdeckung bringbar ist.

4. Flanschverbindung nach einem der vorhergehenden Ansprüche, **dadurch gekennzeichnet, dass** der zumindest eine Umfangsabschnitt (12a; 26a, 28a) vom Ringbund (12; 26, 28) radial nach außen abragt und vom separaten Flanschteil (16; 18; 32) mittelbar oder unmittelbar hintergreifbar ist.

5. Flanschverbindung nach einem der vorhergehenden Ansprüche, **dadurch gekennzeichnet, dass** die Kontaktflächen (12b) zwischen den Umfangsabschnitt (12a) und dem separaten Flanschteil (16; 18) im Querschnitt betrachtet schräg zur Mittelachse (14a) der Befestigungselemente (14; 20) verlaufen.

6. Flanschverbindung nach einem der vorhergehenden Ansprüche, **dadurch gekennzeichnet, dass** das Befestigungselement (14) unmittelbar in das ringförmige Flanschteil (16) eingesetzt ist.

7. Flanschverbindung nach einem der vorhergehenden Ansprüche, **dadurch gekennzeichnet, dass** das separate Flanschteil (18) mehrteilig ausgebildet ist.

8. Flanschverbindung nach Anspruch 7, **dadurch gekennzeichnet, dass** das separate Flanschteil (18) zweiteilig ausgeführt ist und jeweils zumindest zwei Befestigungselemente (20) aufnimmt.

9. Flanschverbindung nach einem der vorhergehenden Ansprüche, **dadurch gekennzeichnet, dass** das separate Flanschteil (18) aus zumindest einem durch ein Flachmaterial hergestellten Flanschabschnitt und durch den Flanschabschnitt durchdringende Befestigungselemente (20) gebildet ist, wobei die mit den Umfangsabschnitten (12a) des Ringbundes (12) zusammenwirkenden Kontaktflächen (12b) an mit den Befestigungselementen (20) fest verbundenen Kopfstücken (22) ausgebildet sind.

10. Flanschverbindung nach einem der vorhergehenden Ansprüche, **dadurch gekennzeichnet, dass** das separate Flanschteil (32) mit radial nach innen ragenden Umfangsabschnitten (32a) versehen ist, die mit den radial nach außen ragenden Umfangsabschnitten (26a, 28a) des Ringbundes (26, 28) in der Befestigungsposition zusammenwirken.

11. Flanschverbindung nach einem der vorhergehenden Ansprüche, **dadurch gekennzeichnet, dass** das zweite abgasführende Bauteil mit einem eine Dichtfläche bildenden Ringbund (28) und einem separaten Flanschteil (32) ausgeführt ist und dass sich die Befestigungselemente durch Bohrungen (34) der beiden Flanschteile (32) erstrecken.

12. Flanschverbindung nach Anspruch 11, **dadurch gekennzeichnet, dass** die die beiden Ringbunde (26, 28) zusammenspannenden Flanschteile (32) als Gleichteile hergestellt sind.

## Claims

1. Flange connection, suitable for connecting components that carry exhaust gases and are subjected to high temperatures, the flange connection comprising a connecting flange (10; 10') associated with a first of the components, said connecting flange (10; 10') being connectable, via at least one fastening element of the flange connection, to a flange of the flange connection associated with a second of the components, the connecting flange (10; 10') of the first component being formed in at least two parts, with at least one annular collar (12) formed on the first component and a separate flange part (16; 18), which cooperates with the fastening element (14; 20) and engages behind the annular collar (12) formed on the first component, the annular collar (12) of the first component comprising at least one circumferential portion (12a) on which the separate flange part (16; 18) contacts the annular collar (12), while circumferential portions (12a) are provided, corresponding to the number of fastening elements (14; 20), **characterised in that** the circumferential portions (12a) are positioned in the region of the fastening elements (14; 20).

2. Flange connection according to claim 1, **characterised in that** outside the at least one circumferential portion (12a; 26a, 28a), an insulating air gap (s) is provided between the annular collar (12; 26, 28) and the separate flange part (16; 18; 32).

3. Flange connection according to claim 2, **characterised in that** the air gap (s) between the annular collar (12; 26, 28) and the separate flange part (16; 18; 32) is configured to be of a width such that the flange part (16; 18; 32) can be pushed onto the annular collar (12; 26, 28) if the circumferential portion (12a; 26a, 28a) is not congruent therewith and can be brought into a position congruent with the circumferential portion (12a; 26a, 28a) by rotation.

4. Flange connection according to one of the preceding claims, **characterised in that** the at least one circumferential portion (12a; 26a, 28a) projects radially outwards from the annular collar (12; 26, 28) and is such that the separate flange part (16; 18; 32) can engage directly or indirectly behind it.

5. Flange connection according to one of the preceding claims, **characterised in that** the contact surfaces (12b) between the circumferential portion (12a) and the separate flange part (16; 18) extend diagonally with respect to the central axis (14a) of the fastening elements (14; 20), viewed in cross-section.

6. Flange connection according to one of the preceding claims, **characterised in that** the fastening element (14) is inserted directly into the annular flange part (16).

7. Flange connection according to one of the preceding claims, **characterised in that** the separate flange part (18) is formed in several parts.

8. Flange connection according to claim 7, **characterised in that** the separate flange part (18) is formed in two parts and accommodates at least two fastening elements (20) in each case.

9. Flange connection according to one of the preceding claims, **characterised in that** the separate flange part (18) is formed by at least one flange portion made from a flat material and by fastening elements (20) penetrating the flange portion, the contact surfaces (12b) that cooperate with the circumferential portions (12a) of the annular collar (12) being formed on head pieces (22) fixedly connected to the fastening elements (20).

10. Flange connection according to one of the preceding claims, **characterised in that** the separate flange part (32) is provided with radially inwardly projecting circumferential portions (32a) which cooperate with the radially outwardly projecting circumferential portions (26a, 28a) of the annular collar (26, 28) in the fastening position.

11. Flange connection according to one of the preceding claims, **characterised in that** the second component carrying exhaust gas is configured with an annular collar (28) forming a sealing surface and a separate flange part (32), and **in that** the fastening elements extend through bores (34) in the two flange parts (32).

12. Flange connection according to claim 11, **characterised in that** the flange parts (32) which join the two annular collars (26, 28) together are manufactured as identical parts.

## Revendications

1. Joint à brides, destiné à assembler des éléments conduisant du gaz d'échappement et soumis à de hautes températures, le joint à brides comportant une première bride de raccord (10; 10') qui est associée à un premier élément et qui peut être assemblée par l'intermédiaire d'au moins un élément de fixation du joint à brides à une bride, associée à un deuxième élément, du joint à brides, la bride de raccord (10; 10') du premier élément étant conçue au moins en deux parties avec au moins un collet annulaire (12) formé sur le premier élément et une partie de bride séparée (16; 18) qui coopère avec l'élément de fixation (14; 20) et qui passe derrière le collet annulaire (12) formé sur le premier élément, le collet annulaire (12) du premier élément comportant au moins un tronçon périphérique (12a) au niveau duquel la partie de bride séparée (16; 18) est en contact avec le collet annulaire (12) et des tronçons périphériques (12a) étant prévus en fonction du nombre des éléments de fixation (14; 20), **caractérisé en ce que** les tronçons périphériques (12a) sont placés dans la zone des éléments de fixation (14; 20).

2. Joint à brides selon la revendication 1, **caractérisé en ce qu'**un intervalle isolant (s) est prévu entre le collet annulaire (12; 26, 28) et la partie de bride séparée (16; 18; 32) en dehors de l'au moins un tronçon périphérique (12a; 26a, 28a).

3. Joint à brides selon la revendication 2, **caractérisé en ce que** l'intervalle isolant (s) entre le collet annulaire (12; 26, 28) et la partie de bride séparée (16; 18; 32) est réalisé si large que la partie de bride (16; 18; 32) peut être glissée sur le collet annulaire (12; 26, 28) lorsque le tronçon périphérique (12a; 26a, 28a) n'est pas recouvrant et peut être amené par une rotation à recouvrir le tronçon périphérique (12a; 26a, 28a).

4. Joint à brides selon l'une des revendications précédentes, **caractérisé en ce que** l'au moins un tronçon périphérique (12a; 26a, 28a) dépasse radialement du collet annulaire (12; 26, 28) vers l'extérieur et peut être pris directement ou indirectement par derrière par la partie de bride séparée (16; 18; 32).

5. Joint à brides selon l'une des revendications précédentes, **caractérisé en ce que** les surfaces de contact (12b) entre le tronçon périphérique (12a) et la partie de bride séparée (16; 18) s'étendent, vues en coupe transversale, obliquement par rapport à l'axe médian (14a) des éléments de fixation (14; 20).

6. Joint à brides selon l'une des revendications précédentes, **caractérisé en ce que** l'élément de fixation (14) est placé directement dans la partie de bride (16) annulaire.

7. Joint à brides selon l'une des revendications précédentes, **caractérisé en ce que** la partie de bride séparée (18) est conçue en plusieurs parties.

8. Joint à brides selon la revendication 7, **caractérisé en ce que** la partie de bride séparée (18) est réalisée en deux parties et reçoit à chaque fois au moins deux éléments de fixation (20).

9. Joint à brides selon l'une des revendications précédentes, **caractérisé en ce que** la partie de bride séparée (18) est formée à partir d'au moins un tronçon de bride fabriqué en un matériau plat et d'éléments de fixation (20) traversant le tronçon de bride, les surfaces de contact (12b) qui coopèrent avec les tronçons périphériques (12a) du collet annulaire (12) étant alors conçues sur des pièces en tête (22) assemblées de manière solidaire aux éléments de fixation (20).

10. Joint à brides selon l'une des revendications précédentes, **caractérisé en ce que** la partie de bride séparée (32) est munie de tronçons périphériques (32a) qui dépassent radialement vers l'intérieur et qui, dans la position de fixation, coopèrent avec les tronçons périphériques (26a, 28a), dépassant radialement vers l'extérieur, du collet annulaire (26, 28).

11. Joint à brides selon l'une des revendications précédentes, **caractérisé en ce que** le deuxième élément conduisant du gaz d'échappement est réalisé avec un collet annulaire (28) formant une surface d'étanchéité et avec une partie de bride séparée (32) et **en ce que** les éléments de fixation s'étendent à travers des trous (34) des deux parties de bride (32).

12. Joint à brides selon la revendication 11, **caractérisé en ce que** les parties de bride (32) serrant ensemble les deux collets annulaires (26, 28) sont fabriquées comme des pièces identiques.
